# EUROPEAN PATENT APPLICATION

(11) **EP 2 143 485 A2**
(43) Date of publication of application: **13.01.2010**
(21) Application number: 09013460.2
(22) Date of filing: 07.04.2005
(51) Int. Cl.: B01F 13/10, B01F 15/02, F04C 2/107

(54) **Modular dye meter**

(62) Divisional of application: 05742914.4
(71) Applicant: Hero Europe S.r.L., 12041 Bene Vagienna (CN) (IT)
(72) Inventor: Sacchet, Alessandro, 12041 Bene Vagienna (CN) (IT)
(74) Representative: Garavelli, Paolo

(57) **Abstract**

A modular dye meter (1) is disclosed for producing a coluring compound starting from one or more components delivered by dispensing means, comprising at least one modular batching member (7) equipped with storage means of at least one of such components and with delivering and batching means of the component, the delivering and batching means being equipped with second fluid connecting means and second electric connecting means; and a supporting structure (3) equipped with a plurality of seats (5), each one of such seats (5) being adapted to operatively house one of such modular batching members (7) and being equipped with first fluid connecting means for an operative connection to the second fluid connecting means and with first electric connecting means for an operative connection to the second electric connecting means, such first fluid connecting means being connected to the dispensing means by interposing circuit fluid connecting means.

## Description

The present invention refers to a modular dye meter.

As known, dye meters are batching machines for preparing colouring compounds, such as paints, enamels, paintings, typically comprising a plurality of tanks for storing individual components and devices for batching and delivering such components, adapted to take from individual tanks accurate amounts of each component, depending on desired compositions, in order to get to the final desired compound. Generally speaking, the prior art has two families of dye meters: the dye meters with tanks in a fixed position connected through ducts to a delivering head placed above a vessel of the final compound, in which the delivery of individual components can occur simultaneously, and the dye meters in which the tanks are placed on rotary platforms equipped with a kinematism adapted to place the individual tanks, or individual sub-groups of tanks, in turn, on the vessel for the final compound to allow delivering the component.

Moreover, depending on components batching modes, there are dye meters with weight-based batching, typically more accurate but relatively slow, since they require weighing in succession all components to be batched, and volumetric dye meters, so far less accurate than the previous ones, but quicker in preparing the final compounds. US-B1-6543490 discloses a modular dye meter according to the preamble of Claim 1.

All existing dye meters however have several inconveniences; first of all, given their constructive complexity, prior art dye meters unavoidably suffer from problems related to their reliability in time. In particular, generally all tanks share the same dye batching and delivering devices: consequently, in case of malfunction or breakage of such devices, a machine stop is unavoidable, that is typically long (generally on the order of 3-5 days for finding spare parts and specialised assistance interventions), of the whole dye meter with related problems both from the production and from the economic points of view. Similarly, ordinary maintenance itself can create machine stop times of the whole dye meter that generate economic losses and great inconveniences.

Moreover, due to their constructive complexity, existing dye meters are relatively costly, and such costs can be compensated with difficulty by those operators whose production rates are particularly small (see, for example, ironmongery shops, small dye works, etc.) but for which the use of a dye meter in their own activity is commercially foreseeable, if not unavoidable.

Moreover, existing dye meters, above all after their purchasing stage, are scarcely customisable and are badly suited to fluctuations of production volumes and to modifications of compositions and/or number and/or type of components of the final compound, if not with the replacement of the whole dye meter or with complex and costly reconfigurations. For such purpose, operators that, when purchasing, are lacking meaningful data related to future volumes and different types of compounds that the market will require, often find it severely difficult to choose sizes (usually in terms of number and type of tanks) and characteristics of the most suitable dye meter for their own needs: not rarely therefore many operators afterwards become equipped with under-sized or over-sized dye meters with respect to their potential production volumes, with the related waste of economic resources.

Due to the viscosity of components with which they operate, traditional dye meters further suffer from dripping problems at the end of their delivery ducts: such drops, when drying, can generate subsequent batching and delivering imperfections or even clog the delivery duct itself.

Therefore, object of the present invention is solving the above prior-art problems by providing a modular dye meter that is free from dripping problems and more economic and reliable with respect to what has been proposed by the known prior art.

Another object of the present invention is providing a modular dye meter that can be easily, economically and quickly able to be suited in time to different needs about production volumes and/or number/type of components of the final compound.

Moreover, an object of the present invention is providing a modular dye meter that is preferably equipped with a more accurate and reliable volumetric batching system than the system proposed by the known prior art.

The above and other objects and advantages of the invention, as will appear from the following description, are obtained by a modular dye meter as disclosed in claim 1. Preferred embodiments and non-trivial variations of the present invention are the subject of the dependent claims.

The present invention will be better described by some preferred embodiments, provided as a non-limiting example, with reference to the enclosed drawings, in which:
- FIG. 1 shows a perspective view of a preferred embodiment of the modular dye meter according to the present invention;
- FIG. 2 shows a perspective view of a modular batching member of the modular dye meter according to the present invention;
- FIG. 3 shows a schematic sectional view of the modular batching member of FIG. 2;
- FIG. 4 shows a perspective view of a preferred embodiment of a dye metering machine comprising the modular dye meter according to the present invention; and
- FIG. 5 shows a perspective view of the dye metering machine of FIG. 4 free from its external coating.

The modular dye meter according to the present invention is aimed to realise colouring compounds from one or more components, advantageously each one of such components being preferably stored individually in storing means of a modula batching member that is operatively connected, in an easily removable way, to dispensing means by interposing circuit means for a fluid connection, such dispensing means being adapted to deliver individual components from modular batching members 7 for composing the final colouring compound, each one of such modular batching members being further equipped with its own delivering and batching means, described below.

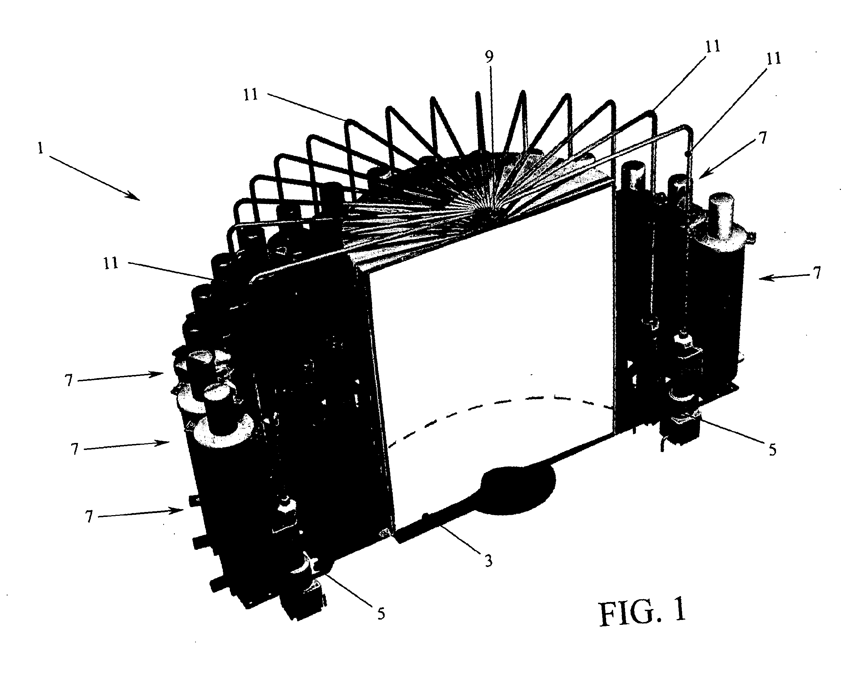

With particular reference to FIG. 1, it is possible to note that the modular dye meter 1 according to the present invention comprises a supporting structure 3 equipped with a plurality of seats 5 and at least one modular batching member 7 operatively housed in one of such seats 5, possibly by interposing mechanical connecting means. Each one of the seats 5 is further equipped with first fluid connecting means and preferably with first electric connecting means of the modular batching member 7. The first fluid connecting means, that are preferably realised as quick connections, are adapted to connect each modular batching member 7 with the dispensing means, in particular preferably realised as a delivering head 9 comprising a plurality of delivering nozzles, each one of such nozzles connected to a modular batching member 7 by interposing circuit fluid connecting means, such circuit fluid connecting means being preferably realised as ducts 11. The first electric connecting means are instead adapted to supply with current, and possibly to drive, as will be better described below, the delivering and batching means of the related modular batching member 7 according to what is pointed out by managing means for obtaining the correct composition of the colouring compound. As can be seen from the Figures, for an obvious rationalisation of spaces, the seats 5 are preferably arranged radially aroung the components-delivering means. It is however evident that the seats 5, and consequently the modular batching members 7, could have a different space arrangement from the shown one; for example, they could be arranged linearly, with an adequate shape and arrangement of the circuit fluid connecting means for a correct connection to the dispensing means.

FIG. 1 shows a particular configuration of the modular dye meter 1 in which all seats 5 operatively house one modular batching member 7; however, an advantageous aspect of the present invention is that the modular dye meter 1 can also operate with some empty seats 5, and, as a limit, even if scarcely interesting from a productive point of view, it could operate even with a single modular batching member 7 suitably connected to any one of the seats 5.

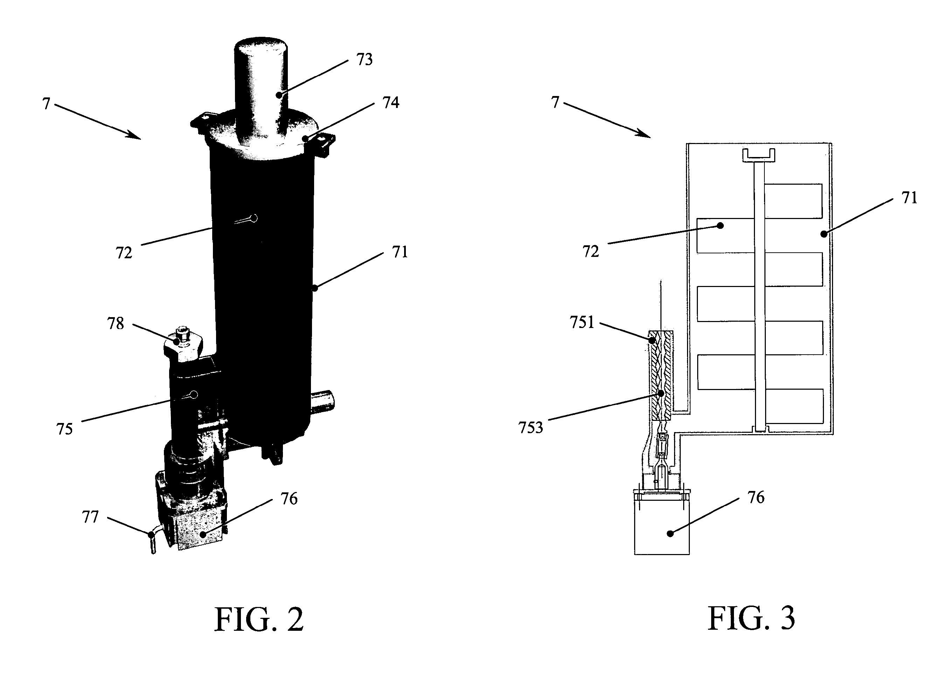

With reference now in particular to FIG. 2 and 3, it is possible to note that each modular batching member 7 comprises storage means, and delivering and batching means of at least one component. The storage means are preferably realised as a cylindrical tank 71 equipped inside with at least one stirring blade 72 coaxial therewith and driven by an actuating motor 73, that is preferably housed in an upper cover 74 of the tank 71 itself in order to keep in suspension the component pigment contained therein. Obviously, in order to proceed with the recharge of the storage means with the component, it is enough to remove the upper cover 74.

The delivering and batching means are adapted to deliver a certain amount of the component contained in the storage means to the dispensing means by interposing the circuit fluid connecting means, and are equipped with second fluid connecting means adapted to be connected to the first fluid connecting means, and with second electric connecting means adapted to be operatively connected to the first electric connecting means, preferably through a quick-connection electric connector or pin 77 without using tools, to be electrically supplied and possibly controlled by the managing means for delivering the correct component batches; in the preferred embodiment shown in the Figures, the delivering and batching means are advantageously realised through at least one pump 75 with progressive recesses that is rotatingly driven by a controlling motor 76 equipped with the second electric connecting means 77. The pump 75 with progressive recesses, which is a known device that is however practically used in different applications for pumping extremely viscous substances (such as for example concretes), is substantially composed of an external stator housing 751 and of an internal rotor 753, rotatingly driven by the controlling motor 76, shaped as a worm screw with progressive recesses whose relative rotation with respect to the stator 751 generates a translation movement of the component inside it. In the Figures, it is possible to note that the outlet end of the pump 75 with progressive recesses is equipped with the second fluid connecting means, preferably realised as a quick connection 78, for the fluid connection of the modular batching member 7 to the first fluid connecting means of any one of the seats 5. When it is actuated by the controlling motor 76, the pump 75 with progressive recesses, during the rotation movement of its internal rotor 753, transfers certain amounts of component from the storage means of the modular batching member 7 to which it is connected to the dispensing means by interposing the circuit fluid connecting means.

The advantages deriving from the use of the pump 75 with progressive recesses are numerous:
- when the internal rotor 753 is stopped with respect to the external stator 751, the pump 75 with progressive recesses guarantees a perfect seal;
- the reliability of the pump 75 with progressive recesses is practically complete since the only moving part is the internal rotor 753 and the wear for revolving friction due to the relative movement between internal rotor 753 and external stator 751 is neglectable;
- contrarily to traditional pumping systems, such as for example piston pumps, in which the pumping effect is cyclic due to the piston stroke, the pump 75 with progressive recesses allows a continuous delivery of the component;
- the pump 75 with progressive recesses allows an extremely accurate volumetric delivery of a component: in fact, the delivered volumetric batching is proportional to the rotation performed by the internal rotor 753, whose rotation is controlled down to the order of fractions of degree by the managing means that control the controlling motor 76; by using the pump 75 with progressive recesses, it is further possible to avoid calibrating the modular dye meter 1 during installation, consequently reducing tooling times and costs;
- it can be provided that the managing means, once having ended the component delivery, drive the controlling motor 76 in such a way as to impose a counter-rotation of a suitable amount to the internal rotor 753: in such a way, the pump 75 with progressive recesses sucks part of the component remained inside the related duct 11 consequently avoiding possible drippings at delivery nozzle level; clearly, it is possible to provide that the managing means drive the pump 75 with progressive recesses so that it sucks the whole component remained in the duct 11, this operation being rather simple since, being the internal volume of duct 11 known, the volume of the component to be sucked is also known and consequently the amount of counter-rotation to be given to the internal rotor 753, thereby avoiding to waste the component and to form sediments and foulings inside the duct 11.

Obviously, it is well within the reach of any skilled person in the art to realise delivering and batching means through any other combination of traditional pumping means and valves, both for a volumetric batching and for a weight batching, thereby remaining within the scope of the present invention.

According to what has been previously described, it is clear that, in order to operatively install a modular batching member 7 in the modular dye meter 1, it is enough to insert it in one of the seats 5, possibly blocking it with mechanical connecting means, and to take care of connecting the first fluid connecting means with the second fluid connecting means and the first electric connecting means with the second electric connecting means; similarly, with the same easiness and quickness, it is possible to disinstall a modular batching member 7 from the modular dye meter 1, to take care of replacing, maintaining or recharging its component, by simply disconnecting the first fluid connecting means from the second fluid connecting means, the first electric connecting means from the second electric connecting means and removing it from its own seat 5, possibly unlocking the mechanical connecting means.

The managing means of the modular dye meter 1 can be those substantially known for managing, and driving traditional dye meters, suitably modified in order to suit them to manage the individual modular batching members 7 in order to guarantee the correct batching of components in order to create a final colouring compound depending on a certain composition formula. In particular, the managing means can comprise a known PC through which the operation of the modular dye meter 1 can be managed and, moreover, the formulations of final colouring compounds can be inserted, corrected and/or modified. Preferably, the managing means drive the installed modular batching members 7 through the electric connecting means, but it cannot be excluded that each modular batching member 7 can be equipped with command receiving means that are different from the managing means, for example wireless receiving means.

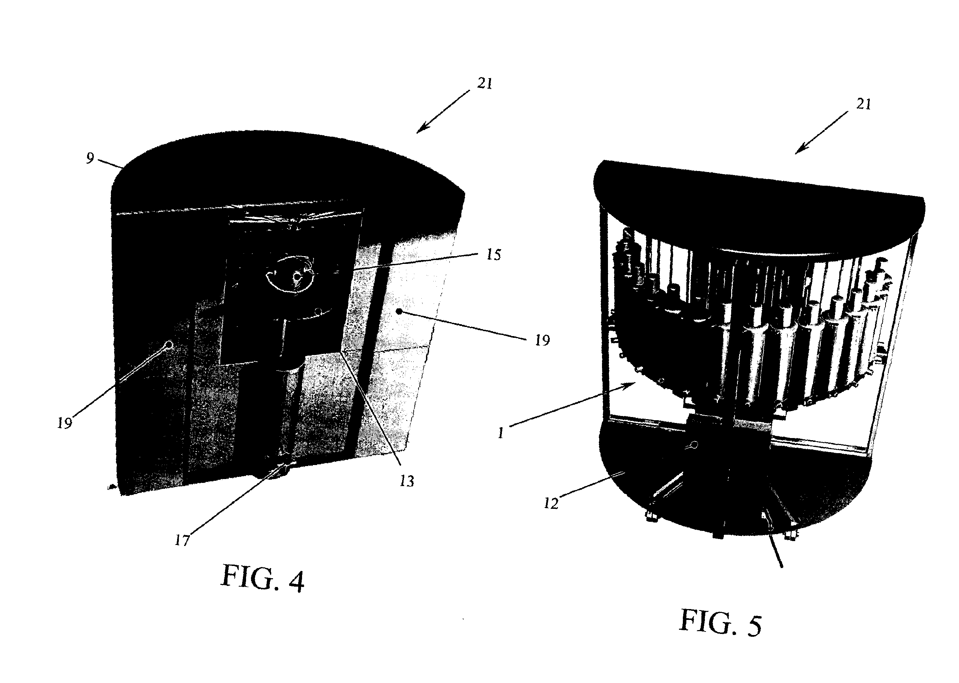

With reference in particular to FIG. 4 and 5, it is possible to note a dye metering machine 21 in which the modular dye meter 1 according to the present invention is housed in a containing structure 12 equipped with a plate 13 adapted to support and correctly position a vessel 15 of the final colouring compound under the dispensing means. Like in the prior art, the plate 12 can be adjustable in height, for example through a screw-nut screw system or a pneumatic piston driven by a pedal 17 in order to optimally determine the vertical position of the vessel 15 under the dispensing means. The containing structure 12 is obviously equipped with coating panels 19 in order to protect the modular dye meter 1 from external agents. It is clear that it is possible to realise at least part of the coating panels 19 in such a way that they can be easily removed, even without the need of using tools, in order to easily access the modular dye meter 1 for maintenance purposes or to remove, recharge, add or replace one or more of its modular batching members 7. It is further evident that the containing structure 12 is equipped with means for electrically supplying the modular dye meter 1.

As described previously, the modular dye meter 1 according to the present invention has a series of evident advantages with respect to what has bene proposed by the prior art, advantages that are related both to its practicality of use and as regards the saving and optimisation of costs and resources. In particular, it is clear that it is possible to be able to optimally dimension the modular dye meter 1 by only using the number of modular bathcing members 7 containing the types of components that are really necessary for producing the final colouring compound of interest. In case of subsequent production modifications, it is possible to extremely simply, economically and quickly update the modular dye meter 1 by replacing allo or part of the already installed modular batching members 7, or by integrating them with new modular batching members 7 containing the components for new productions, without therefore the need of having to employ the replacement or complex and costly updates of the dye metering machine 21.

Moreover, in case of malfunctions of one or more of the modular batching members 7, it is evident that this can be extremely quickly and simply replaced, even without the use of tools and without necessarily making an ad hoc assistance service intervene. Moreover, the possible malfunction of one or more of the modular batching members 7 does not cause the total machine stop for the modular dye meter 1, but allows going on producing by simply replacing the modular batching member 7 that badly operates with a spare one. If a spare modular batching member 7 is not available, it is anyway possible to go on producing the colouring compounds that do not require the component contained in the badly-operating modular batching member 7, consequently allowing to avoid having to completely stop the production, as instead occurred with what was proposed by the prior art.

## Claims

1. Modular dye meter (1) for producing a colouring compound starting from one or more components delivered by dispensing means, comprising:
- at least one modular batching member (7) equipped with storage means of at least one of said components and with delivering and batching means of said component, said delivering and batching means being equipped with second fluid connecting means and second electric connecting means;
- a supporting structure (3) equipped with a plurality of seats (5), each one of said seats (5) being adapted to operatively house one of said modular batching members (7) and being equipped with first fluid connecting means for an operative connection to said second fluid connecting means and with first electric connecting means for an operative connection to said second electric connecting means, said first fluid connecting means being connected to said dispensing means by interposing circuit fluid connecting means; and
- managing means of said modular batching members (7);
**characterised in that** said delivering and batching means comprise at least one pump (75) with progressive recesses that is rotatingly driven by a controlling motor (76), said pump (75) being composed of an external stator housing (751) and of an internal rotor (753), rotatingly driven by a controlling motor (76), said rotor (753) being shaped as a worm screw with progressive recesses whose relative rotation with respect to the stator (751) is adapted to generate a translation movement of the component inside the stator (751), said managing means, once said pump (75) has ended the delivery of a component, being adapted to drive said controlling motor (76) in such a way as to perform a counter-rotation of said internal rotor (753), said pump (75) being adapted to thereby suck part of the component remained inside a related duct (11) avoiding possible drippings at delivery nozzle level.

2. Modular dye meter (1) according to claim 1, **characterised in that** said seats (5) are equipped with mechanical connecting means adapted to operatively block said modular batching members (7).

3. Modular dye meter (1) according to claim 1, **characterised in that** said dispensing means comprise at least one delivering head (9) comprising a plurality of delivering nozzles, each one of said delivering nozzles being connected to one of said modular batching members (7) by interposing said circuit fluid connecting means.

4. Modular dye meter (1) according to claim 1, **characterised in that** said circuit fluid connecting means are ducts (11).

5. Modular dye meter (1) according to claim 1, **characterised in that** said storage means comprise a tank (71).

6. Modular dye meter (1) according to claim 1, **characterised in that** said storage means comprise a stirring blade (72) driven by an actuating motor (73).

7. Dye metering machine (21) **characterised in that** it is equipped with a modular dye meter (1) according to any one of the previous claims.

8. Dye metering machine (21) according to claim 7, **characterised in that** it comprises a containing structure (12), equipped with removable coating panels (19), of said modular dye meter (1) and with an height-adjustable plate (13) for supporting at least one vessel (15) of said colouring compound under said dispensing means.
